(19) Europäisches Patentamt
European Patent Office
Office européen des brevets

(11)  **EP 3 106 644 B1**

(12)  **EUROPEAN PATENT SPECIFICATION**

(45) Date of publication and mention
of the grant of the patent:
**17.10.2018  Bulletin 2018/42**

(51) Int Cl.:
**F02B 37/00** *(2006.01)*          **F01C 1/00** *(2006.01)*
**F01C 11/00** *(2006.01)*          **F02B 41/10** *(2006.01)*

(21) Application number: **16174864.5**

(22) Date of filing: **16.06.2016**

(54) **COMPOUND CYCLE ENGINE**

ZUSAMMENGESETZTER ZYKLUSMOTOR

MOTEUR À CYCLE COMPOSÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **16.06.2015   US 201514740878**

(43) Date of publication of application:
**21.12.2016   Bulletin 2016/51**

(73) Proprietor: **Pratt & Whitney Canada Corp.
Longueuil, Québec J4G 1A1 (CA)**

(72) Inventors:
• **BOLDUC, Sebastien
  (01BE5) Longueuil, Québec J4G 1A1 (CA)**
• **FONTAINE, Mike
  (01BE5) Longueuil, Québec J4G 1A1 (CA)**
• **LANDRY, Luc
  (01BE5) Longueuil, Québec J4G 1A1 (CA)**
• **THOMASSIN, Jean
  (01BE5) Longueuil, Québec J4G 1A1 (CA)**

(74) Representative: **Dehns
St. Brides House
10 Salisbury Square
London EC4Y 8JD (GB)**

(56) References cited:
**EP-A2- 2 011 962          EP-A2- 2 687 675
EP-A2- 2 778 342          US-A- 4 742 683
US-A1- 2011 094 221**

**Description**

TECHNICAL FIELD

The application relates generally to compound cycle engines and, more particularly, to such compound cycle engines including one or more rotary combustion engine(s).

BACKGROUND OF THE ART

Some compound cycle engines include a rotary engine turbocharged and compounded by a turbine located downstream of the turbocharger turbine. However, known compounded rotary engine arrangements typically have limited available power for turbo compounding and/or limited performances, for example on start-up before the turbocharger is running.

EP 2687675 A2 discloses a compound cycle engine that has at least one rotary unit defining an internal combustion engine, a velocity turbine in proximity of each unit, and a turbocharger. The exhaust port of each rotary unit is in fluid communication with the flowpath of the velocity turbine upstream of its rotor. The rotors of the velocity turbine and of each rotary unit drive a common load. The outlet of the compressor of the turbocharger is in fluid communication with the inlet port of each rotary unit, and the inlet of the pressure turbine of the turbocharger is in fluid communication with the flowpath of the velocity turbine downstream of its rotor.

SUMMARY

The present invention provides a compound cycle engine as defined in claim 1.

The reaction ratio of the first stage turbine may be a pressure-based reaction ratio having a value of at most 0.2.

The reaction ratio of the first stage turbine may be a pressure-based reaction ratio having a value of at most 0.1 and the second stage turbine may have a pressure-based reaction ratio having a value of at least 0.25.

The reaction ratio of the first stage turbine may be a pressure-based reaction ratio having a value of at most 0.1 and the second stage turbine may have a pressure-based reaction ratio having a value of at least 0.25.

Each exhaust pipe may extend axially or substantially axially.

Each of the at least two rotary engines may be a Wankel engine.

The first stage turbine may have the output shaft extending therethrough and be in driving engagement with the output shaft through a transmission, the transmission being located between the first and second rotary engines.

Common rail fuel injectors may be provided for each of the at least two rotary engines, and a heavy fuel source in communication with the fuel injectors.

The at least two rotary engines may be located such that a same number of the at least two rotary engines is disposed in front of and behind the first stage turbine along the output shaft.

The at least two rotary engines may be located such that a number of the at least two rotary engines disposed in front of the first stage turbine is one more or one less than a number of the at least two rotary engines disposed behind the first stage turbine along the output shaft.

The present invention further provides a method of compounding at least two rotary engines as defined in claim 14.

DESCRIPTION OF THE DRAWINGS

Reference is now made to the accompanying figures in which:

Fig. 1 is a block diagram of a compound cycle engine according to a particular embodiment;

Fig. 2 is a cross-sectional view of a Wankel engine which can be used in a compound cycle engine such as shown in Fig. 1, according to a particular embodiment;

Fig. 3 is a schematic representation of the compound cycle engine of Fig. 1 according to a particular embodiment;

Fig. 4 is a schematic tridimensional view of a compound cycle engine such as shown in Fig. 3 according to a particular embodiment;

Fig. 5 is a schematic representation of the compound cycle engine of Fig. 1 according to another embodiment;

Fig. 6 is a schematic tridimensional view of a compound cycle engine such as shown in Fig. 5 according to a particular embodiment;

Fig. 7 is a schematic representation of the compound cycle engine of Fig. 1 according to yet another embodiment; and

Fig. 8 is a schematic tridimensional view of a compound cycle engine such as shown in Fig. 7 according to a particular embodiment.

DETAILED DESCRIPTION

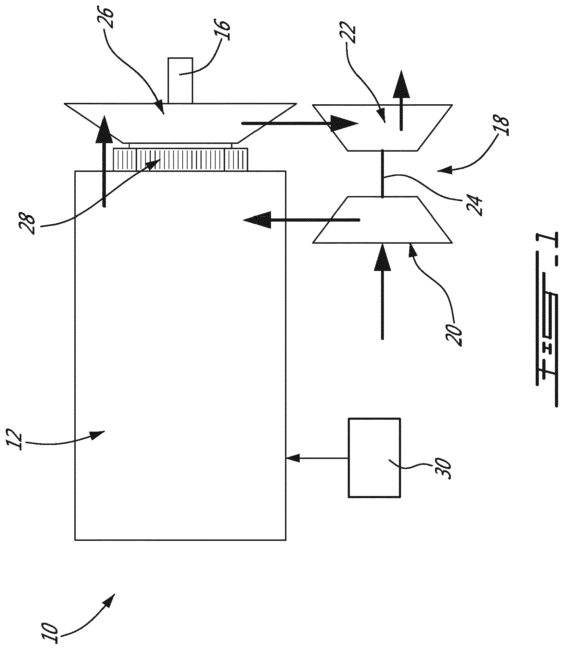

Referring now to Fig. 1, a compound cycle engine 10 is schematically shown. The compound cycle engine 10 includes rotary units 12, each unit 12 being defined by a rotary internal combustion engine having a rotor sealingly engaged in a respective housing. The rotary units 12 drive a common load. In the embodiment shown, the common load includes an output shaft 16 which may be for example connected to a propeller through a reduction gearbox (not shown) and to which the rotor of each unit 12 is engaged.

The compound cycle engine 10 also includes a turbocharger 18, formed by a compressor 20 and a second stage turbine 22 which are drivingly interconnected by a shaft 24. In a particular embodiment, the second stage turbine 22 is a pressure turbine, also known as a reaction turbine. The compressor 20 and the second stage turbine 22 may each be a single-stage device or a multiple-stage device with a single shaft or split on multiple independent shafts in parallel or in series, and may be a centrifugal or axial device. In the embodiment shown, the shaft 24 of the turbocharger 18 rotates independently of the common load. The compressor 20 of the turbocharger 18 compresses the air before it enters the unit(s) 12.

The rotary unit(s) 12 form the core of the compound cycle engine 10 and each provide an exhaust flow in the form of exhaust pulses. The exhaust flow from the unit(s) 12 is supplied to a compound or first stage turbine 26 in fluid communication therewith, also driving the common load. The first stage turbine 26 is a velocity type turbine, also known as an impulse type turbine, and could be an axial, radial or mixed flow turbine.

A pure impulse turbine works by changing the direction of the flow without accelerating the flow inside the rotor; the fluid is deflected without a significant pressure drop in the blade passages. The blades of the pure impulse turbine are designed such that in a transverse plane perpendicular to the direction of flow, the area defined between the blades is the same at the leading edges of the blades and at the trailing edges of the blade: the flow area of the turbine is constant, and the blades are usually symmetrical about the plane of the rotating disc. The work of the pure impulse turbine is due only to the change of direction in the flow through the turbine blades. Each blade of the pure impulse turbine thus forms a bucket pushed by the exhaust flow. Typical pure impulse turbines include steam and hydraulic turbines,

In contrast, a reaction turbine accelerates the flow inside the rotor but needs a static pressure drop across the rotor to enable this flow acceleration. The blades of the reaction turbine are designed such that in a transverse plane perpendicular to the direction of flow, the area defined between the blades is larger at the leading edges of the blades than at the trailing edges of the blade: the flow area of the turbine reduces along the direction of flow, and the blades are usually not symmetrical about the plane of the rotating disc. The work of the pure reaction turbine is due mostly to the acceleration of the flow through the turbine blades.

Most aeronautical turbines are not "pure impulse" or "pure reaction", but rather operate following a mix of these two opposite but complementary principles - i.e. there is a pressure drop across the blades, there is some reduction of flow area of the turbine blades along the direction of flow, and the speed of rotation of the turbine is due to both the acceleration and the change of direction of the flow. The degree of reaction of a turbine can be determined using the temperature-based reaction ratio (equation 1) or the pressure-based reaction ratio (equation 2), which are typically close to one another in value for a same turbine:

$$(1) Reaction(T) = \frac{(t_{S3} - t_{S5})}{(t_{S0} - t_{S5})}$$

$$(2) Reaction(P) = \frac{(P_{S3} - P_{S5})}{(P_{S0} - P_{S5})}$$

where T is temperature and P is pressure, s refers to a static port, and the numbers refers to the location the temperature or pressure is measured: 0 for the inlet of the turbine vane (stator), 3 for the inlet of the turbine blade (rotor) and 5 for the exit of the turbine blade (rotor); and where a pure impulse turbine would have a ratio of 0 (0%) and a pure reaction turbine would have a ratio of 1 (100%).

Aeronautical turbines referred to as impulse turbines typically have a reaction ration of 0.25 (25% reaction) or lower, although other values are also possible.

In a particular embodiment, the first stage turbine 26 is configured to take benefit of the kinetic energy of the pulsating flow exiting the core engine(s) 12 while stabilizing the flow, and the second stage turbine 22 is configured to extract energy from the remaining pressure in the flow. Accordingly, the first stage turbine 26 has a lower reaction ratio (i.e. lower value) than that of the second stage turbine 22.

The rotor of the first stage turbine 26 is rotated by the forces exerted on the blades by the impingement against them of the exhaust pulses. As such, the kinetic energy provided by each exhaust pulse is used to drive the rotor of the first stage turbine 26 while imposing minimum back pressure on the rotary unit(s) 12.

In a particular embodiment, the second stage turbine 22 has a reaction ratio higher than 0.25; in another particular embodiment, the second stage turbine 22 has a reaction ratio higher than 0.3; in another particular embodiment, the second stage turbine 22 has a reaction ratio of about 0.5; in another particular embodiment, the second stage turbine 22 has a reaction ratio higher than 0.5.

In a particular embodiment, the first stage turbine 26 has a reaction ratio of at most 0.2; in another particular embodiment, the first stage turbine 26 has a reaction ratio of at most 0.15; in another particular embodiment, the first stage turbine 26 has a reaction ratio of at most 0.1; in another particular embodiment, the first stage turbine 26 has a reaction ratio of at most 0.05.

It is understood that any of the above-mentioned reaction ratios for the second stage turbine 22 can be combined with any of the above-mentioned reaction ratios for the first stage turbine 26 and that these ratios can be pressure-based or temperature-based. Other values are also possible.

The first stage turbine 26 is connected to the output shaft 16 through an appropriate type of transmission 28, for example a planetary, star, offset or angular gear system. The outlet of the first stage turbine 26 is in fluid communication with an inlet of the second stage turbine 22. Energy is extracted from the exhaust gas exiting the first stage turbine 26 by the second stage turbine 22 to drive the compressor 20 via the connecting shaft 24.

Although not shown, the air may optionally circulate through an intercooler between the compressor 20 and the units 12, and the compound cycle engine 10 also includes a cooling system, including for example a circulation system for a coolant (e.g. water-ethylene, oil, air) to cool the housing of each unit 12, an oil coolant for the internal mechanical parts of the units 12, one or more coolant heat exchangers, etc.

The fuel injector(s) of each unit 12, which in a particular embodiment are common rail fuel injectors, communicate with a source 30 of Heavy fuel (e.g. diesel, kerosene (jet fuel), equivalent biofuel), and deliver the heavy fuel into the units 12 such that the combustion chamber is stratified with a rich fuel-air mixture near the ignition source and a leaner mixture elsewhere.

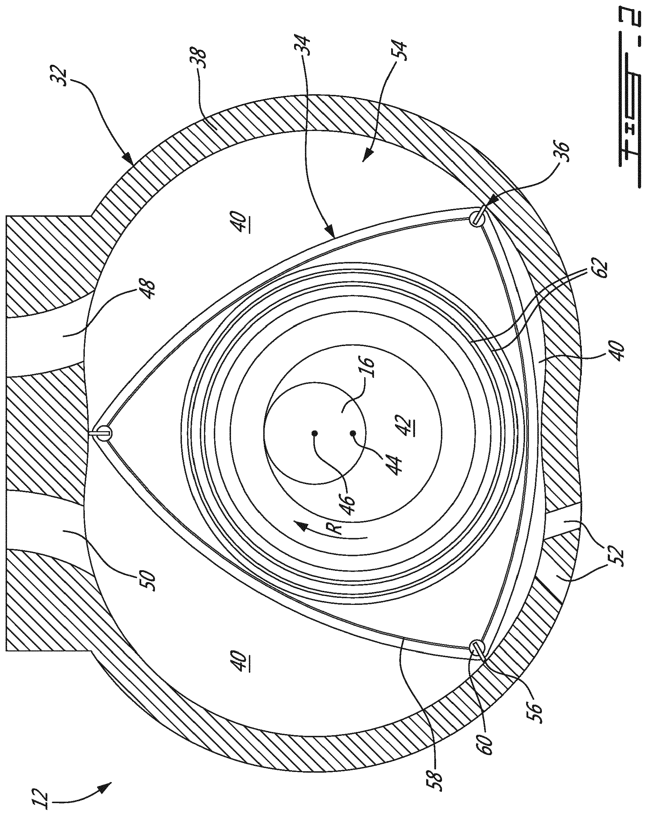

In a particular embodiment each unit 12 is a Wankel engine. Referring to Fig. 2, an exemplary embodiment of a Wankel engine is shown; it is understood that the configuration of the units 12 used in the compound cycle engine 10, e.g. placement of ports, number and placement of seals, etc., may vary from that of the embodiment shown; each unit 12 may be defined by a rotary engine other than a Wankel engine.

As shown in Fig. 2, in a particular embodiment, each unit 12 comprises a housing 32 defining a rotor cavity with a profile defining two lobes, which is preferably an epitrochoid. A rotor 34 is received within the rotor cavity. The rotor defines three circumferentially-spaced apex portions 36, and a generally triangular profile with outwardly arched sides. The apex portions 36 are in sealing engagement with the inner surface of a peripheral wall 38 of the housing 32 to form three working chambers 40 between the rotor 34 and the housing 32.

The rotor 34 is engaged to an eccentric portion 42 of the output shaft 16 to perform orbital revolutions within the stator cavity. The output shaft 16 performs three rotations for each orbital revolution of the rotor 34. The geometrical axis 44 of the rotor 34 is offset from and parallel to the axis 46 of the housing 32. During each orbital revolution, each chamber 40 varies in volume and moves around the stator cavity to undergo the four phases of intake, compression, expansion and exhaust.

An intake port 48 is provided through the peripheral wall 38 for admitting compressed air into one of the working chambers 40. An exhaust port 50 is also provided through the peripheral wall 38 for discharge of the exhaust gases from the working chambers 40. Passages 52 for a spark plug or other ignition mechanism, as well as for one or more fuel injectors (not shown) are also provided through the peripheral wall 38. Alternately, the intake port 48, the exhaust port 50 and/or the passages 52 may be provided through an end or side wall 54 of the housing.

For efficient operation the working chambers 40 are sealed, for example by spring-loaded apex seals 56 extending from the rotor 34 to engage the peripheral wall 38, and spring-loaded face or gas seals 58 and end or corner seals 60 extending from the rotor 34 to engage the end walls 54. The rotor 34 also includes at least one spring-loaded oil seal ring 62 biased against the end wall 54 around the bearing for the rotor 34 on the shaft eccentric portion 42.

Each Wankel engine provides an exhaust flow in the form of a relatively long exhaust pulse; for example, in a particular embodiment, each Wankel engine has one explosion per 360° of rotation of the output shaft, with the exhaust port remaining open for about 270° of that rotation, thus providing for a pulse duty cycle of about 75%. By contrast, a piston of a reciprocating 4-stroke piston engine typically has one explosion per 720° of rotation of the output shaft with the exhaust port remaining open for about 180° of that rotation, thus providing a pulse duty cycle of 25%. In a particular embodiment, the relatively long exhaust pulse of the Wankel engine may facilitate driving of the first stage turbine 26.

The pressure ratios across a compound cycle engine with one or more rotary engines or units can be defined by:

$$P_C = P_R P_{PT} P_{TT}$$

where $P_C$ is the pressure ratio for the turbocharger compressor, $P_R$ is the inlet to outlet pressure ratio of the rotary engines, $P_{PT}$ is the pressure ratio for the compound turbine, and $P_{TT}$ is the pressure ratio for the turbocharger turbine.

The inventors have found that in prior art compound engines including one or more rotary engines where the compound turbine is a pressure turbine located downstream of the turbocharger turbine, and where each rotary engine has equal volumetric expansion and compression ratios, the relatively high volumetric compression ratio of the rotary engine(s) typically results in a relatively low possible pressure ratio for the compressor of the turbocharger ($P_C$), as limited by the peak pressure capability of the rotary engine(s). As such, the pressure ratio across the turbines ($P_{PT}P_{TT}$) is limited, which limits the power available for the compound turbine.

In some compound engines, such as shown in U.S. 7,775,044 issued August 17, 2010 and incorporated by reference herein, the volumetric compression ratio of each rotary engine is smaller than its expansion ratio. The lower volumetric compression ratio typically results in a larger possible pressure ratio for the compressor of the turbocharger ($P_C$), which in turn increases the pressure ratio across the turbines ($P_{PT}P_{TT}$). However, the lower volumetric compression ratio usually leads to an inlet to outlet pressure ratio of the rotary engine(s) which is reduced $P_R$, which may increase back pressure and thermal loads on the rotary engine(s) because of the increased difficulty in purging the exhaust gases. Such a configuration also generally provides for a low compression on the rotary engine on start-up before the turbocharger is running, which may limit performances of the compound cycle engine.

By contrast, in at least some embodiments of the compound cycle engine 10, the pressure ratio $P_{PT}$ across the first stage turbine 26 is close to or about 1 since it is a velocity or impulse turbine. As such, a same pressure ratio for the compressor $P_C$ (to comply with the peak pressure capability) and a same inlet to outlet pressure ratio of the rotary unit(s) $P_R$ (to minimize backpressure and thermal loading on each rotary unit) allow for the pressure ratio $P_{TT}$ available for the turbine 22 of the turbocharger 18 to be greater than with a compound cycle engine in which the compound turbine is a pressure turbine, i.e. with a pressure ratio $P_{PT}$ greater than 1 and greater than that of the first stage turbine 26 of the compound cycle engine 10. Thus, the use of a velocity or impulse turbine as the first stage turbine 26 may allow for an increase of the power available to the turbo compounding.

In addition, the volumetric compression ratio of the rotary unit(s) 12 does not need to be reduced to achieve this increase in power available for the turbine 22 of the turbocharger 18. As such, in a particular embodiment, the volumetric efficiency of each rotary unit may be maximized and its thermal loads minimized, and the performances of the compound cycle engine 10 at start-up are not compromised by the increase of available power.

Also, the use of a velocity or impulse turbine as the first stage turbine 26 eliminates the need for the large volume exhaust collector typically required between the rotary engine(s) and a pressure first stage turbine. This allows for the compound turbine 26 to be located upstream of the turbocharger turbine 22 instead of downstream thereof.

In a particular embodiment which may be particularly but not exclusively suitable for low altitude, each rotary unit 12 is a Wankel engine with a volumetric compression ratio of from 6:1 to 8:1. The power recovery of the first stage turbine 26 may be maximized by having the exhaust gas temperatures at the material limit, and as such is suitable for such relatively low volumetric compression ratios, which may help increase the power density of the Wankel engine and may also improve combustion at high speed and of heavy fuel.

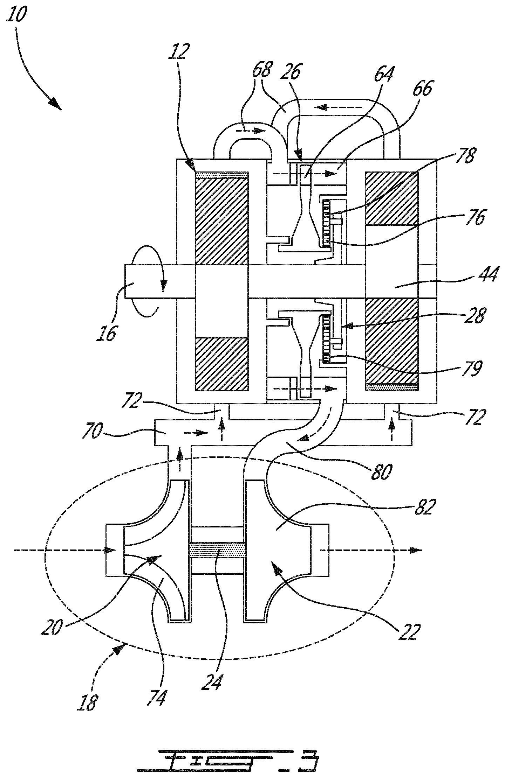

Referring to Figs. 3-4, a compound cycle engine 10 according to a particular embodiment is schematically shown. In this embodiment, two rotary units 12 in the form of Wankel engines are included, with the two eccentric portions 42 of the output shaft 16 being angularly offset at 180° from one another for balancing of the compound cycle engine 10.

The rotor blades 64 of the first stage turbine 26 extend across an annular flowpath 66. In the embodiment shown, the rotor of the first stage turbine 26 is an axial rotor and the flowpath 66 extends axially. A respective exhaust pipe 68 extends from the exhaust port 50 (see also Fig. 2) of each unit 12 to a portion of the flowpath 66 located upstream of the rotor blades 64 as shown in Fig. 3, such as to circulate the exhaust flow from the exhaust port 50 to the first stage turbine 26. The exhaust pipes 68 extend independently from one another.

In order to minimize the distance between the first stage turbine 26 and each rotary unit 12 and as such the length of the exhaust pipes 68, the first stage turbine 26 and its transmission 28 are located between the two rotary units 12 along the output shaft 16. In the embodiment shown and referring more particularly to Fig. 3, the output shaft 16, for example made of two interconnected pieces, extends through the first stage turbine 26 and the rotary units 12, with the eccentric portions 42 extending from the remainder of the output shaft 16, either as an integral piece thereof or as separately manufactured elements attached thereto.

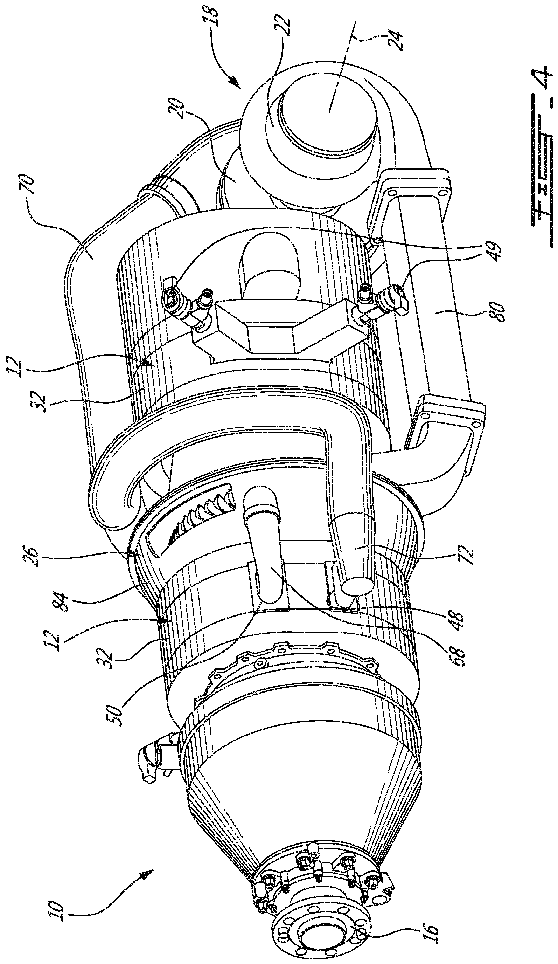

In a particular embodiment and as shown in Fig. 4, the casing 84 surrounding the first stage turbine 26 is directly attached to the housing 32 of each rotary unit 12. Such a configuration may allow for relatively short exhaust pipes 68, thus helping minimize loss of the kinetic energy of the exhaust pulses between each rotary unit 12 and the first stage turbine 26. Fuel injectors 49, which may be common rail fuel injectors, communicate with each unit 12.

The flowpath 66 and/or the outlet of each exhaust pipe 68 are shaped to direct the exhaust pulses onto the blades 64 to allow the exhaust pulses to drive rotation of the rotor of the first stage turbine 26. Each exhaust pipe 68 communicates with the flowpath 66 at a different location around the circumference of the first stage turbine 26. In the embodiment shown, the housings 32 of the rotary units 12 are angularly offset at 180° from one another, for example to allow for a reduction in thermal deflection of the housings 32. As such, the two exhaust ports 50 and exhaust pipes 68 are located on opposite sides of the compound cycle engine 10. In a particular embodiment, each exhaust pipe 68 extends axially or substantially axially to further minimize its length.

Still referring to Figs. 3-4, a pipe 70 extends from an outlet of the compressor 20, and splits into two inlet pipes 72, each connected to the intake port 48 (see also Fig. 2) of the rotary unit 12, such as to circulate the exhaust flow from the compressor 20 to each intake port 48. In this embodiment, the compressor 20 includes a single radial impeller 74. Alternately, the compressor 20 may include one or more rotors, with radial, axial or mixed flow blades.

In the embodiment shown, the transmission 28 of the first stage turbine 26 includes a sun gear 76 attached on the shaft of the rotor of the first stage turbine 26, and an array of planet gears 78 meshed with the sun gear 76. The planet gears 78 are mounted on a rotating carrier which is drivingly engaged to the output shaft 16. The planet gears 78 are meshed with a stationary ring gear 79. In another embodiment, the planet gears 78 are mounted on a stationary carrier, and are meshed with a ring gear drivingly engaged to the output shaft 16. The speed reduction ratio of the transmission 28 may be selected to optimize operation of the first stage turbine 26 and of the rotary units 12.

A turbine pipe 80 extends from a portion of the flowpath 66 downstream of the rotor blades 64 (as shown in Fig. 3) to the inlet of the second stage turbine 22, such as to circulate the exhaust flow from the first stage turbine 26 to the second stage turbine 22. In this embodiment, the second stage turbine 22 includes a single radial impeller 82. Alternately, the second stage turbine 22 may include one or more rotors, with radial, axial or mixed flow blades.

In the embodiment shown, the turbocharger shaft 24 extends along a different axis than that of the output shaft 16. In the particular embodiment shown in Fig. 4, the turbocharger shaft 24 extends transverse to the output shaft 16. The turbocharger shaft 24 may additionally be connected to a different load than that of the output shaft 16, through a gearbox if necessary.

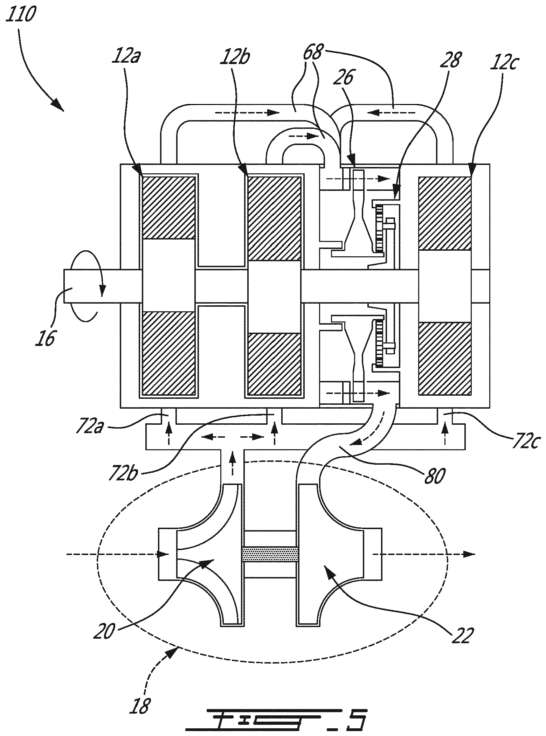

Referring to Figs. 5-6, a compound cycle engine 110 according to another embodiment is schematically shown, where elements similar to those of the previously described compound cycle engine 10 are identified by the same reference numerals and will not be further described therein.

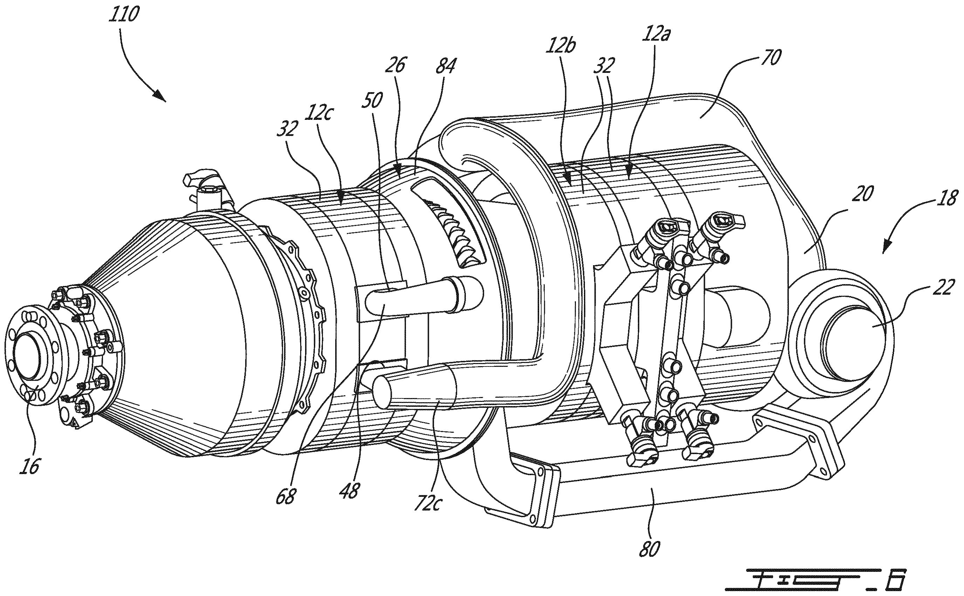

In this embodiment, three rotary units 12a,b,c, for example Wankel engines such as shown in Fig. 2, are provided. The first stage turbine 26 and its transmission 28 are located between two of the units 12, i.e. two units 12a,b are provided in front of the first stage turbine 26 and the transmission 28 and the other unit 12c is provided behind the first stage turbine 26 and the transmission 28 along the output shaft 16 (Fig. 5), or two units 12a,b are provided behind the first stage turbine 26 and the transmission 28, and the other unit 12c is provided in front of the first stage turbine 26 and the transmission 28 along the output shaft 16 (Fig. 6). In the embodiment shown, the eccentric portions 42 of the output shaft 16 are angularly offset at 120° from one another for balancing of the compound cycle engine 10.

Each exhaust pipe 68 independently extends from the exhaust port 50 of its respective unit 12a,b,c to the flowpath 66, upstream of the rotor blades 64. In the embodiment shown in Fig. 6, the housings 32 of the two adjacent units 12a,b have a same orientation, i.e. with the exhaust ports 50 and exhaust pipes 68 located on a same side of the compound cycle engine 110, and the remaining unit 12c has its housing 32 disposed at 180° from the others, with the exhaust port 50 and exhaust pipe 68 located on the opposite side of the compound cycle engine 110. Each exhaust pipe 68 communicates with the flowpath 66 at a different location around the circumference of the first stage turbine 26.

The pipe 70 extending from the outlet of the compressor 20 splits into three inlet pipes 72a,b,c, each connected to the intake port 48 of the respective rotary units 12a,b,c. The inlet pipes 72a,b on a same side of the body of the compound cycle engine 110 share a common portion before separating into the individual pipes 72a,b near the inlets 48.

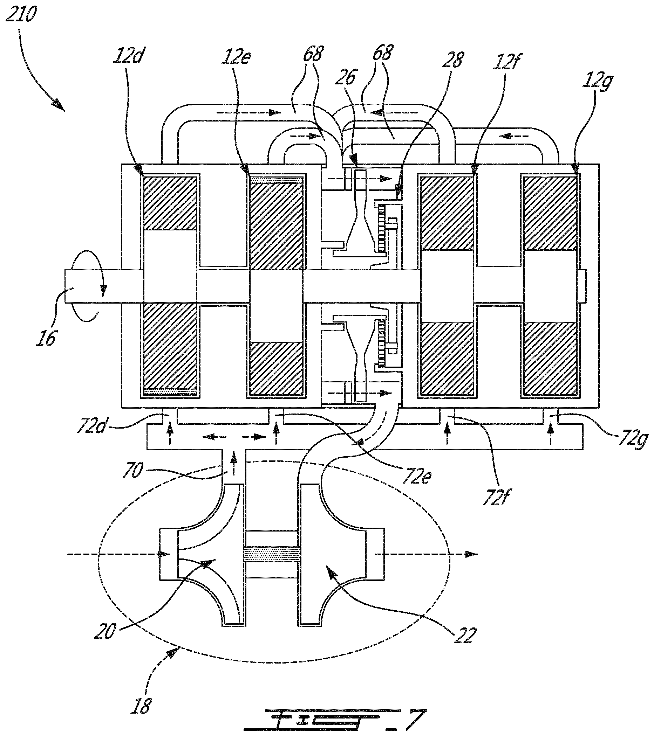

Referring to Figs. 7-8, a compound cycle engine 210 according to another embodiment is schematically shown, where elements similar to those of the previously described compound cycle engines 10, 110 are identified by the same reference numerals and will not be further described herein.

In this embodiment, four rotary units 12d,e,f,g, for example Wankel engines such as shown in Fig. 2, are provided. The first stage turbine 26 and its transmission 28 are located between two blocks of two of the units 12, i.e. two units 12d,e are located in front of the first stage turbine 26 and the transmission 28, and the other two units 12f,g are located behind the first stage turbine 26 and the transmission 28 along the output shaft 16. In the embodiment shown, the eccentric portions 42 of the output shaft 16 are angularly offset at 90° from one another for balancing of the compound cycle engine 10.

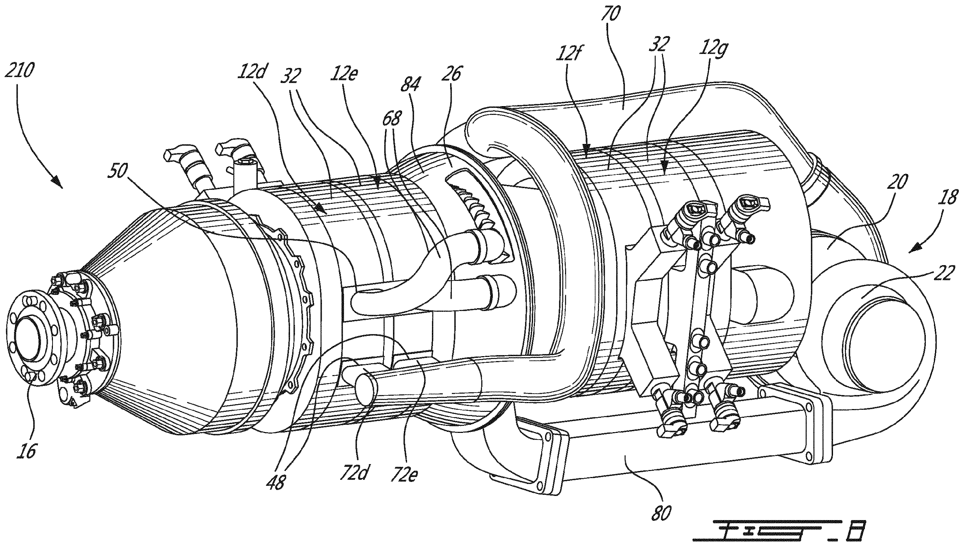

Each exhaust pipe 68 independently extends from the exhaust port 50 of its respective unit 12d,e,f,g to the flowpath 66, upstream of the rotor blades 64. The exhaust pipes 68 extend axially or substantially axially to help minimize their length. In the embodiment shown in Fig. 8, the housings 32 of the first block of adjacent units 12d,e have a same orientation with the exhaust ports 50 and exhaust pipes 68 located on a same side of the compound cycle engine 110. The housing 32 of the second block of adjacent units 12f,g are oriented at 180° with respect to the first block, with the exhaust ports 50 and exhaust pipes 68 located on the opposite side of the compound cycle engine 110. Each exhaust pipe 68 communicates with the flowpath 66 at a different location around the circumference of the first stage turbine 26.

The pipe 70 extending from the outlet of the compressor 20 splits into four inlet pipes 72d,e,f,g, each connected to the intake port 48 of the respective unit 12d,e,f,g. The inlet pipes 72d,e and 72f,g connecting to adjacent inlets 48 share a common portion before separating into the individual pipes near the inlets 48.

In other embodiments which is not shown, the turbocharger 18 also drives the output shaft 16, for example by having the pressure turbine 22 of the turbocharger 18 directly engaged to the first stage turbine 26, or engaged to the output shaft 16 through a respective transmission. In other embodiments which are not shown, the turbocharger and rotary units(s) are coaxial, but the output shaft and turbocharger shaft rotate independently from one another, for example with the output shaft being hollow and surrounding the turbocharger shaft which extends therethrough.

Although embodiments with 2, 3 and 4 rotary units have been shown, in other embodiments, more than 4 rotary units may be provided. In a particular embodiment, the rotary units are disposed such as to have a same number of rotary units in front and behind the first stage turbine along the output shaft, for an even number of rotary units, or a number of rotary units in front of the first stage turbine which is one more or one less than the number of rotary units behind the first stage turbine along the output shaft, for an odd number of rotary units. Such a disposition may allow for the length of the exhaust pipes 68 to be minimized and as such may help minimize power loss between the rotary units and the first stage turbine.

Although not shown, in all embodiments, variable geometry elements such as inlet guide vanes, blow-off valves, waste gates, variable turbine nozzles, etc. may be used to obtain desired system operability.

Although not shown, the first stage turbine 26 may be mounted in an offset manner rather than co-axially with the rotary units 12. The first stage turbine 26 may be drivingly engaged to the output shaft through an angular, for example perpendicular, transmission system, for example including a gearbox and a tower shaft.

The above description is meant to be exemplary only, and one skilled in the art will recognize that changes may be made to the embodiments described without departing from the scope of the invention disclosed, as defined by the appended claims.

**Claims**

1. A compound cycle engine (10, 110, 210) comprising:

an output shaft (16);
at least two rotary units (12) each defining an internal combustion engine including an engine rotor (34) sealingly and rotationally received within a respective housing (32), each housing (32) defining an inlet port (48) and an exhaust port (50), the engine rotor (34) of each of the at least two rotary units (12) being in driving engagement with the output shaft (16);
a first stage turbine (26) including a flowpath (66) and a turbine rotor having a circumferential array of blades (64) extending across the flowpath (66), the turbine rotor being in driving engagement with the output shaft (16); and
a turbocharger (18) including a compressor (20) and a second stage turbine (22) in driving engagement with one another; wherein:

an outlet of the compressor (20) is in fluid communication with the inlet port (48) of each housing;
the exhaust port (50) of each housing (32) is in fluid communication with a first portion of the flowpath (66) of the first stage turbine (26), the first portion of the flowpath (66) being located upstream of the circumferential array of blades (64) of the first stage turbine (26);
an inlet of the second stage turbine (22) is in fluid communication with a second portion of the flowpath (66) of the first stage turbine (26), the second portion of the flowpath (66) being located downstream of the circumferential array of blades (64) of the first stage turbine (26);
the first stage turbine (26) has the output shaft (16) extending therethrough;

**characterized in that**:

the at least two rotary units (12) include a first rotary unit (12a, 12b, 12d, 12e) located in front of the first stage turbine (26) along the output shaft (16) and a second rotary unit (12c, 12f, 12g) located behind the first stage turbine (26) along the output shaft (16);
**in that** the first stage turbine (26) has a reaction ratio of at most 0.2; and
**in that** the second stage turbine (22) has a reaction ratio of at least 0.25.

2. The compound cycle engine (10, 110, 210) as defined in claim 1, wherein the reaction ratio of the first stage turbine (26) is a pressure-based reaction ratio having a value of at most 0.2.

3. The compound cycle engine (10, 110, 210) as defined in claim 1, wherein the reaction ratio of the first stage turbine (26) is a pressure-based reaction ratio having a value of at most 0.1 and the reaction ratio of the second stage turbine (22) is a pressure-based reaction ratio having a value of at least 0.25.

4. The compound cycle engine (10, 110, 210) as defined in claim 1, wherein the reaction ratio of the first stage turbine (26) is a pressure-based reaction ratio having a value of at most 0.2 and the reaction ratio of the second stage turbine (22) is a pressure-based reaction ratio having a value of at least 0.25.

5. The compound cycle engine (10, 110, 210) as defined in any one of the preceding claims, wherein each of the at least two rotary units (12) is a Wankel engine.

6. The compound cycle engine (10, 110, 210) as defined in any one of the preceding claims, wherein the compressor (20) and the second stage turbine (22) are in driving engagement with one another through a turbocharger shaft rotatable independently of the output shaft.

7. The compound cycle engine (10, 110, 210) as defined in claim 6, wherein the turbocharger shaft (24) and the output shaft (16) extend in a non-parallel manner.

8. The compound cycle engine (10, 110, 210) as defined in any one of the preceding claims, further comprising common rail fuel injectors (49) for each of the at least two rotary units (12), and a heavy fuel source (30) in communication with the fuel injectors (49).

9. The compound cycle engine (210) as defined in any one of the preceding claims, wherein the at least two rotary units (12) include the first rotary unit (12d), the second rotary unit (12f), and additional rotary units (12e, 12g), the additional rotary units (12e, 12g) being located such that a same number of the rotary units (12) is disposed in front of and behind the first stage turbine (26) along the output shaft (16).

10. The compound cycle engine (110) as defined in any one of claims 1 to 8, wherein the at least two rotary units (12) include the first rotary unit (12a), the second rotary unit (12c), and additional rotary units (12b), the additional rotary units (12b) being located such that a number of the rotary units (12a, 12b) disposed in front of the first stage turbine is one more or one less than a number of the rotary units (12c) disposed behind the first stage turbine (26) along the output shaft (16).

11. The compound cycle engine (10, 110, 210) as defined in any one of the preceding claims, comprising:

a respective exhaust pipe (68) providing the fluid communication between each exhaust port (50) of the at least two rotary units (12) and the inlet of the first stage turbine (26); an inlet duct (70, 72) providing the fluid communication between the outlet of the compressor (20) and the inlet port (48) of each of the at least two rotary units (12); and a turbine pipe (80) providing the fluid communication between the outlet of the first stage turbine (26) and the inlet of the second stage turbine (22).

12. The compound cycle engine (10, 110, 210) as defined in claim 11, wherein each exhaust pipe (68) extends axially or substantially axially.

13. The compound cycle engine (10, 110, 210) as defined in any one of the preceding claims, wherein the first stage turbine (26) has the output shaft (16) extending therethrough and is in driving engagement with the output shaft (16) through a transmission (28), the transmission (28) being located between the first and second rotary units (12).

14. A method of compounding at least two rotary engines (12), the method comprising:

drivingly engaging a second stage turbine (22) and a compressor (20) in a turbocharger (18) such as to drive the compressor (20) with the second stage turbine (22); drivingly engaging each of the at least two rotary engines (12) and a first stage turbine (26) to an output shaft (16) by placing the first stage turbine (26) between two of the at least two rotary engines (12) along the output shaft (16), the first stage turbine (26) having a reaction ratio of at most 0.2, the second stage turbine (22) having a reaction ratio of at least 0.25; circulating a compressor exhaust flow from an outlet of the compressor (20) into an inlet port (48) of each of the at least two rotary engines (12); circulating an engine exhaust flow from an exhaust port (50) of each of the at least two rotary engines (12) into an inlet of the first stage turbine (26); and circulating a first stage turbine (26) exhaust flow from an outlet of the first stage turbine (26) into an inlet of the second stage turbine (22) of the turbocharger (18).

15. The method as defined in claim 14, further comprising providing fluid communication between a source of heavy fuel (30) and each of the at least two rotary engines (12).

**Patentansprüche**

1. Zusammengesetzter Zyklusmotor (10, 110, 210), umfassend:

eine Ausgangswelle (16); mindestens zwei Dreheinheiten (12), wobei jede einen Verbrennungsmotor definiert, der einen Triebwerksrotor (34) umfasst, der dichtend und drehbar innerhalb eines jeweiligen Gehäuses (32) aufgenommen ist, wobei jedes Gehäuse (32) eine Einlassöffnung (48) und eine Abluftöffnung (50) definiert, wobei der Triebwerksrotor (34) jeder der mindestens zwei Dreheinheiten (12) in Antriebseingriff mit der Ausgangswelle (16) steht; eine Turbine der ersten Stufe (26), die einen Strömungsweg (66) und einen Turbinenrotor umfasst, der eine umlaufende Anordnung von Schaufeln (64) aufweist, die sich über den Strömungsweg (66) erstrecken, wobei der Turbinenrotor in Antriebseingriff mit der Ausgangswelle (16) steht;
und
einen Turbolader (18) mit einem Kompressor (20) und einer Turbine der zweiten Stufe (22) in Antriebseingriff miteinander; wobei:

ein Auslass des Kompressors (20) in Fluidverbindung mit der Einlassöffnung (48) jedes Gehäuses steht;
die Abluftöffnung (50) jedes Gehäuses (32) in Fluidverbindung mit einem ersten Abschnitt des Strömungswegs (66) der Turbine der ersten Stufe (26) steht, wobei der erste Abschnitt des Strömungswegs (66) der umlaufenden Anordnung von Schaufeln (64) der Turbine der ersten Stufe (26) vorgeschaltet ist;
ein Einlass der Turbine der zweiten Stufe (22) in Fluidverbindung mit einem zweiten Abschnitt des Strömungswegs (66) der Turbine der ersten Stufe (22) steht, wobei der zweite Abschnitt des Strömungswegs (66) der umlaufenden Anordnung von Schaufeln (64) der Turbine der ersten Stufe (26) nachgeschaltet ist;
durch die Turbine der ersten Stufe (26) die Ausgangswelle (16) hindurchläuft;

**dadurch gekennzeichnet, dass**:

die mindestens zwei Dreheinheiten (12) eine erste Dreheinheit (12a, 12b, 12d, 12e) umfassen, die vor der Turbine der ersten Stufe (26) entlang der Ausgangswelle (16) angeordnet ist, und eine zweite Dreheinheit (12c, 12f, 12g) umfassen, die hinter der Turbine der ersten Stufe (26) entlang der Ausgangswelle (16) angeordnet ist;
die Turbine der ersten Stufe (26) einen Reaktionsgrad von höchstens 0,2 aufweist; und
die Turbine der zweiten Stufe (22) einen Reaktionsgrad von mindestens 0,25 aufweist.

2. Zusammengesetzter Zyklusmotor (10, 110, 210) nach Anspruch 1, wobei der Reaktionsgrad der Turbine der ersten Stufe (26) ein druckbasierter Reaktionsgrad ist, der einen Wert von höchstens 0,2 aufweist.

3. Zusammengesetzter Zyklusmotor (10, 110, 210) nach Anspruch 1, wobei der Reaktionsgrad der Turbine der ersten Stufe (26) ein druckbasierter Reaktionsgrad ist, der einen Wert von höchstens 0,1 aufweist, und der Reaktionsgrad der Turbine der zweiten Stufe (22) ein druckbasierter Reaktionsgrad ist, der einen Wert von mindestens 0,25 aufweist.

4. Zusammengesetzter Zyklusmotor (10, 110, 210) nach Anspruch 1, wobei der Reaktionsgrad der Turbine der ersten Stufe (26) ein druckbasierter Reaktionsgrad ist, der einen Wert von höchstens 0,2 aufweist, und der Reaktionsgrad der Turbine der zweiten Stufe (22) ein druckbasierter Reaktionsgrad ist, der einen Wert von mindestens 0,25 aufweist.

5. Zusammengesetzter Zyklusmotor (10, 110, 210) nach einem der vorstehenden Ansprüche, wobei jede der mindestens zwei Dreheinheiten (12) ein Wankelmotor ist.

6. Zusammengesetzter Zyklusmotor (10, 110, 210) nach einem der vorstehenden Ansprüche, wobei der Kompressor (20) und die Turbine der zweiten Stufe (22) in Antriebseingriff miteinander über eine Turboladerwelle stehen, die unabhängig von der Ausgangswelle drehbar ist.

7. Zusammengesetzter Zyklusmotor (10, 110, 210) nach Anspruch 6, wobei die Turboladerwelle (24) und die Ausgangswelle (16) nicht parallel verlaufen.

8. Zusammengesetzter Zyklusmotor (10, 110, 210) nach einem der vorstehenden Ansprüche, weiter umfassend Common-Rail-Brennstoffeinspritzer (49) für jede der mindestens zwei Dreheinheiten (12) und eine Quelle für schweren Brennstoff (30) in Verbindung mit den Brennstoffeinspritzern (49).

9. Zusammengesetzter Zyklusmotor (210) nach einem der vorstehenden Ansprüche, wobei die mindestens zwei Dreheinheiten (12) die erste Dreheinheit (12d), die zweite Dreheinheit (12f) und zusätzliche Dreheinheiten (12e, 12g) umfassen, wobei die zusätzlichen Dreheinheiten (12e, 12g) so angeordnet sind, dass die gleiche Anzahl von Dreheinheiten (12) vor und nach der Turbine der ersten Stufe (26) entlang der Ausgangswelle (16) angeordnet ist.

10. Zusammengesetzter Zyklusmotor (110) nach einem der Ansprüche 1 bis 8, wobei die mindestens zwei Dreheinheiten (12) die erste Dreheinheit (12a), die zweite Dreheinheit (12c) und zusätzliche Dreheinheiten (12b) umfassen, wobei die zusätzlichen Dreheinheiten (12b) so angeordnet sind, dass eine Anzahl von Dreheinheiten (12a, 12b), die vor der Turbine der ersten Stufe angeordnet ist, um eins höher oder niedriger ist als eine Anzahl von Dreheinheiten (12c), die hinter der Turbine der ersten Stufe (26) entlang der Ausgangswelle (16) angeordnet ist.

**11.** Zusammengesetzter Zyklusmotor (10, 110, 210) nach einem der vorstehenden Ansprüche, umfassend:

eine jeweilige Abgasleitung (68), die die Fluidverbindung zwischen jeder Abluftöffnung (50) der mindestens zwei Dreheinheiten (12) und dem Einlass der Turbine der ersten Stufe (26) bereitstellt;
einen Einlasskanal (70, 72), die die Fluidverbindung zwischen dem Auslass des Kompressors (20) und der Einlassöffnung (48) jeder der mindestens zwei Dreheinheiten (12) bereitstellt; und
eine Turbinenleitung (80), die die Fluidverbindung zwischen dem Auslass der Turbine der ersten Stufe (26) und dem Einlass der Turbine der zweiten Stufe (22) bereitstellt.

**12.** Zusammengesetzter Zyklusmotor (10, 110, 210) nach Anspruch 11, wobei jede Abgasleitung (68) axial oder im Wesentlichen axial verläuft.

**13.** Zusammengesetzter Zyklusmotor (10, 110, 210) nach einem der vorstehenden Ansprüche, wobei durch die Turbine der ersten Stufe (26) die Ausgangswelle (16) hindurchläuft und diese Turbine in Antriebseingriff mit der Ausgangswelle (16) über ein Getriebe (28) steht, wobei das Getriebe (28) zwischen der ersten und der zweiten Dreheinheit (12) angeordnet ist.

**14.** Verfahren zum Zusammensetzen von mindestens zwei Drehkolbenmotoren (12), wobei das Verfahren Folgendes umfasst:

Bringen einer Turbine der zweiten Stufe (22) und eines Kompressors (20) in einem Turbolader (18) in Antriebseingriff, um den Kompressor (20) mit der Turbine der zweiten Stufe (22) anzutreiben;
Bringen jeder der mindestens zwei Dreheinheiten (12) und einer Turbine der ersten Stufe (26) in Antriebsangriff an einer Ausgangswelle (16), durch Anordnen der Turbine der ersten Stufe (26) zwischen zwei der mindestens zwei Drehkolbenmotoren (12) entlang der Ausgangswelle (16), wobei die Turbine der ersten Stufe (26) einen Reaktionsgrad von höchstens 0,2 aufweist und die Turbine der zweiten Stufe (22) einen Reaktionsgrad von mindestens 0,25 aufweist;
Führen eines Kompressorabluftstroms von einem Auslass des Kompressors (20) in eine Einlassöffnung (48) jeder der mindestens zwei Drehkolbenmotoren (12);
Führen eines Motorabluftstroms von einer Abluftöffnung (50) jeder der mindestens zwei Drehkolbenmotoren (12) in einen Einlass der Turbine der ersten Stufe (26);
und
Führen eines Abluftstroms der Turbine der ersten Stufe (26) von einem Auslass der Turbine der ersten Stufe (26) in einen Einlass der Turbine der zweiten Stufe (22) des Turboladers (18).

**15.** Verfahren nach Anspruch 14, weiter umfassend das Bereitstellen einer Fluidverbindung zwischen einer Quelle für schweren Brennstoff (30) und jedem der mindestens zwei Drehkolbenmotoren (12).

**Revendications**

**1.** Moteur à cycle composé (10, 110, 210) comprenant :

un arbre de sortie (16) ;
au moins deux unités rotatives (12) définissant chacune un moteur à combustion interne comprenant un rotor de moteur (34) reçu de manière étanche et rotative à l'intérieur d'un boîtier respectif (32), chaque boîtier (32) définissant un orifice d'admission (48) et un orifice d'échappement (50), le rotor de moteur (34) de chacune des au moins deux unités rotatives (12) étant en prise d'entraînement avec l'arbre de sortie (16) ;
une turbine de premier étage (26) comprenant un trajet d'écoulement (66) et un rotor de turbine ayant un réseau circonférentiel de pales (64) s'étendant à travers le trajet d'écoulement (66), le rotor de turbine étant en prise d'entraînement avec l'arbre de sortie (16) ; et
un turbocompresseur (18) comprenant un compresseur (20) et une turbine de deuxième étage (22) en prise d'entraînement l'un avec l'autre ;
dans lequel :

une sortie du compresseur (20) est en communication fluidique avec l'orifice d'admission (48) de chaque boîtier ;
l'orifice d'échappement (50) de chaque boîtier (32) est en communication fluidique avec une première partie du trajet d'écoulement (66) de la turbine de premier étage (26), la première partie du trajet d'écoulement (66) étant située en amont du réseau circonférentiel de pales (64) de la turbine de premier étage (26) ;
une entrée de la turbine de deuxième étage (22) est en communication fluidique avec une deuxième partie du trajet d'écoulement (66) de la turbine de premier étage (22), la deuxième partie du trajet d'écoulement (66) étant située en aval du réseau circonférentiel de pales (64) de la turbine de premier étage (26) ;

la turbine de premier étage (26) a l'arbre de sortie (16) s'étendant à travers celle-ci ;

**caractérisé en ce que** :

les au moins deux unités rotatives (12) comprennent une première unité rotative (12a, 12b, 12d, 12e) située devant la turbine de premier étage (26) le long de l'arbre de sortie (16) et une deuxième unité rotative (12c, 12f, 12g) située derrière la turbine de premier étage (26) le long de l'arbre de sortie (16) ;
**en ce que** la turbine de premier étage (26) a un rapport de réaction d'au plus 0,2 ; et
**en ce que** la turbine de deuxième étage (22) a un rapport de réaction d'au moins 0,25.

2. Moteur à cycle composé (10, 110, 210) selon la revendication 1, dans lequel le rapport de réaction de la turbine de premier étage (26) est un rapport de réaction basé sur la pression ayant une valeur d'au plus 0,2.

3. Moteur à cycle composé (10, 110, 210) selon la revendication 1, dans lequel le rapport de réaction de la turbine de premier étage (26) est un rapport de réaction basé sur la pression ayant une valeur d'au plus 0,1 et le rapport de réaction de la turbine de deuxième étage (22) est un rapport de réaction basé sur la pression ayant une valeur d'au moins 0,25.

4. Moteur à cycle composé (10, 110, 210) selon la revendication 1, dans lequel le rapport de réaction de la turbine de premier étage (26) est un rapport de réaction basé sur la pression ayant une valeur d'au plus 0,2 et le rapport de réaction de la turbine de deuxième étage (22) est un rapport de réaction basé sur la pression ayant une valeur d'au moins 0,25.

5. Moteur à cycle composé (10, 110, 210) selon l'une quelconque des revendications précédentes, dans lequel chacune des au moins deux unités rotatives (12) est un moteur Wankel.

6. Moteur à cycle composé (10, 110, 210) selon l'une quelconque des revendications précédentes, dans lequel le compresseur (20) et la turbine de deuxième étage (22) sont en prise d'entraînement l'un avec l'autre à travers un arbre de turbocompresseur rotatif indépendamment de l'arbre de sortie.

7. Moteur à cycle composé (10, 110, 210) selon la revendication 6, dans lequel l'arbre de turbocompresseur (24) et l'arbre de sortie (16) s'étendent de manière non-parallèle.

8. Moteur à cycle composé (10, 110, 210) selon l'une quelconque des revendications précédentes, comprenant en outre des injecteurs de carburant à rampe commune (49) pour chacune des au moins deux unités rotatives (12), et une source de combustible lourd (30) en communication avec les injecteurs de carburant (49).

9. Moteur à cycle composé (210) selon l'une quelconque des revendications précédentes, dans lequel les au moins deux unités rotatives (12) comprennent la première unité rotative (12d), la deuxième unité rotative (12f), et des unités rotatives supplémentaires (12e, 12g), les unités rotatives supplémentaires (12e, 12g) étant situées de sorte qu'un même nombre d'unités rotatives (12) est disposé devant et derrière la turbine de premier étage (26) le long de l'arbre de sortie (16).

10. Moteur à cycle composé (110) selon l'une quelconque des revendications 1 à 8, dans lequel les au moins deux unités rotatives (12) comprennent la première unité rotative (12a), la deuxième unité rotative (12c), et des unités rotatives supplémentaires (12b), les unités rotatives supplémentaires (12b) étant situées de sorte qu'un nombre d'unités rotatives (12a, 12b) disposées devant la turbine de premier étage est une de plus ou une de moins qu'un nombre d'unités rotatives (12c) disposées derrière la turbine de premier étage (26) le long de l'arbre de sortie (16).

11. Moteur à cycle composé (10, 110, 210) selon l'une quelconque des revendications précédentes, comprenant :

un tuyau d'échappement (68) respectif fournissant la communication fluidique entre chaque orifice d'échappement (50) des au moins deux unités rotatives (12) et l'entrée de la turbine de premier étage (26) ;
un conduit d'entrée (70, 72) fournissant la communication fluidique entre la sortie du compresseur (20) et l'orifice d'admission (48) de chacune des au moins deux unités rotatives (12) ; et
un tuyau de turbine (80) fournissant la communication fluidique entre la sortie de la turbine de premier étage (26) et l'entrée de la turbine de deuxième étage (22).

12. Moteur à cycle composé (10, 110, 210) selon la revendication 11, dans lequel chaque tuyau d'échappement (68) s'étend axialement ou sensiblement axialement.

13. Moteur à cycle composé (10, 110, 210) selon l'une quelconque des revendications précédentes, dans lequel la turbine de premier étage (26) a l'arbre de sortie (16) s'étendant à travers celle-ci et est en prise d'entraînement avec l'arbre de sortie (16) à travers une transmission (28), la transmission (28) étant située entre les première et deuxième unités rotatives (12).

14. Procédé de composition d'au moins deux moteurs rotatifs (12), le procédé comprenant :

la prise d'entraînement d'une turbine de deuxième étage (22) et d'un compresseur (20) dans un turbocompresseur (18) de sorte à entraîner le compresseur (20) avec la turbine de deuxième étage (22) ;

la prise d'entraînement de chacun des au moins deux moteurs rotatifs (12) et d'une turbine de premier étage (26) avec un arbre de sortie (16) par placement de la turbine de premier étage (26) entre deux des au moins deux moteurs rotatifs (12) le long de l'arbre de sortie (16), la turbine de premier étage (26) ayant un rapport de réaction d'au plus 0,2, la turbine de deuxième étage (22) ayant un rapport de réaction d'au moins 0,25 ;

la circulation d'un flux d'échappement de compresseur d'une sortie du compresseur (20) à un orifice d'admission (48) de chacun des au moins deux moteurs rotatifs (12) ;

la circulation d'un flux d'échappement de moteur d'un orifice d'échappement (50) de chacun des au moins deux moteurs rotatifs (12) à une entrée de la turbine de premier étage (26) ; et

la circulation d'un flux d'échappement de turbine de premier étage (26) d'une sortie de la turbine de premier étage (26) à une entrée de la turbine de deuxième étage (22) du turbocompresseur (18).

15. Procédé selon la revendication 14, comprenant en outre la fourniture d'une communication fluidique entre une source de combustible lourd (30) et chacun des au moins deux moteurs rotatifs (12).

FIG. 1

FIG.2

_Fig. 3_

EP 3 106 644 B1

FIG. 4

16

*F I G . 5*

FIG. 6

FIG. 7

Fig.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2687675 A2

- US 7775044 B